# EUROPEAN PATENT APPLICATION

(11) **EP 4 718 520 A1**
(43) Date of publication of application: **01.04.2026**
(21) Application number: 24893013.3
(22) Date of filing: 18.09.2024
(51) Int. Cl.: H01M 4/134, H01M 4/1395, H01M 4/02, H01M 10/0525

(54) **NEGATIVE ELECTRODE SHEET, AND PREPARATION METHOD THEREFOR AND USE THEREOF**

(30) Priority: 22.11.2023 CN 202311572833
(71) Applicant: Guangzhou Automobile Group Co., Ltd., Guangzhou, Guangdong 511434 (CN)
(72) Inventor: WU, Jian, Guangzhou, Guangdong 511434 (CN); SHI, Yong, Guangzhou, Guangdong 511434 (CN); XU, Nan, Guangzhou, Guangdong 511434 (CN)
(74) Representative: Metida
(86) International application number: PCT/CN2024/119263
(87) International publication number: WO 2025/107854

(57) **Abstract**

Disclosed are an anode electrode sheet, a preparation method therefor and use thereof. The anode electrode sheet includes: a current collector having a first side and a second side opposite to each other; a first active material layer, a second active material layer, and a first artificial SEI layer, the first active material layer, the second active material layer, and the first artificial SEI layer are sequentially arranged on the first side of the current collector in a direction away from the current collector, the first active material layer includes metallic lithium, the second active material layer includes a metallic lithium alloy, and the first artificial SEI layer includes a lithide. The use of this anode electrode sheet can avoid the problems such as continuous thickening of the SEI film, persistent growth of lithium dendrites, dead lithium, and penetration of the separator by lithium dendrites, etc., thereby being conducive to improving the cycle stability of a lithium metal battery employing such an anode electrode sheet.

## Description

The present application claims priority and benefits of a patent application No. 202311572833.0 filed with the China National Intellectual Property Administration on November 22, 2023, and the entire text of which is incorporated herein by reference.

### TECHNICAL FIELD

The present application belongs to the technical field of batteries, and specifically relates to an anode electrode sheet, a preparation method therefor and use thereof.

### BACKGROUND

Compared to the theoretical specific capacity of 372 mAh/g for a graphite anode electrode, metallic lithium has an ultra-high theoretical specific capacity of 3860 mAh/g, the most negative standard reduction potential (-3.04 V), as well as characteristics of low density and a small ionic radius, and using metallic lithium as the anode electrode active material of a battery can further enhance the energy density of the battery.

Due to the high diffusion barrier of lithium ions, they will react with the electrolytic solution/electrolyte, consuming the metallic lithium anode electrode and the electrolytic solution, resulting in loss of capacity. Moreover, unlike commercial graphite anode electrodes, the storage mechanism of lithium ions in metallic lithium anode electrodes is not intercalation-based; instead, the metallic lithium itself serves as a lithium source, which results in a significant volume expansion of the metallic lithium anode electrode. Whether applying the metallic lithium anode electrodes in solid-state or liquid systems, they suffer from the technical problems such as the high chemical reactivity of metallic lithium, the thickening of the SEI film due to infinitely large rate of volume change, the growth of lithium dendrites, the formation of dead lithium, and penetration of the separator by lithium dendrites, etc.

### SUMMARY

The present application aims to solve at least one of the technical problems in the related art to a certain extent. To this end, an objective of the present application is to propose an anode electrode sheet, a preparation method therefor and use thereof. Using such an anode electrode sheet can avoid the problems such as continuous thickening of the SEI film, persistent growth of lithium dendrites, dead lithium, and penetration of the separator by lithium dendrites, etc., thereby being conducive to improving the cycle stability of a lithium metal battery employing such an anode electrode sheet.

In a first aspect of the present application, the present application provides an anode electrode sheet. According to an embodiment of the present application, the anode electrode sheet includes:
a current collector including a first side and a second side opposite to each other; and
a first active material layer, a second active material layer, and a first artificial solid electrolyte interface (SEI) layer, wherein the first active material layer, the second active material layer, and the first artificial SEI layer are sequentially arranged on the first side of the current collector in a direction away from the current collector, the first active material layer includes metallic lithium, the second active material layer includes a metallic lithium alloy, and the first artificial SEI layer includes a lithide.

According to the above embodiments of the present application, the anode electrode sheet involves sequentially arranging a first active material layer, a second active material layer, and a first artificial SEI layer on the first side of the current collector in a direction away from the current collector. The first active material layer includes metallic lithium, which can serve as a supplemental lithium source to improve the cycle life of the battery, and the second active material layer includes a metallic lithium alloy, which, on the one hand, can prevent the highly reactive metallic lithium in the first active material layer from directly contacting the electrolytic solution or electrolyte, and on the other hand can allow an alloying reaction to occur between the metallic lithium and the metallic lithium alloy in the second active material layer during the charge and discharge processes of the battery, facilitating the uniform deposition of metallic lithium, and thus effectively avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc. The first artificial SEI layer includes a lithide, which, on the one hand, can further prevent the highly reactive metallic lithium in the first active material layer from directly contacting the electrolytic solution or electrolyte, and on the other hand, can promote the rapid migration of lithium ions, thereby effectively preventing the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc. Therefore, using the anode electrode sheet of the present application can improve the interfacial problems of the application of metallic lithium in a secondary battery, avoiding the problems such as continuous thickening of the SEI film, persistent growth of lithium dendrites, dead lithium, and penetration of the separator by lithium dendrites, etc., thereby being conducive to improving the cycle stability of a lithium metal battery employing such an anode electrode sheet.

In addition, according to the above embodiments of the present application, the anode electrode sheet may also have the following additional technical features:

In some embodiments of the present application, the current collector is a composite current collector.

In some embodiments of the present application, the current collector is a metal foil current collector, and the metal foil current collector includes at least one selected from the group consisting of copper, aluminum, zinc, nickel, and chromium.

In some embodiments of the present application, the current collector has a thickness of 1 µm to 10 µm.

In some embodiments of the present application, the current collector includes a base film, a first conductive layer disposed on one side of the base film, and a second conductive layer disposed on the opposite other side of the base film.

In some embodiments of the present application, the first conductive layer and the second conductive layer separately and independently include at least one of copper, aluminum, zinc, nickel, and chromium. Thereby, the electrical conductivity of the current collector can be improved.

In some embodiments of the present application, the thicknesses of the first conductive layer and the second conductive layer are separately and independently 0.3 µm to 10 µm.

In some embodiments of the present application, the base film includes at least one of polyethylene, polyethylene terephthalate, polyimide, polypropylene, polyamide, polyphenylene sulfide, and polyethylene naphthalate.

In some embodiments of the present application, the base film has a thickness of 1 µm to 10 µm.

In some embodiments of the present application, the aforementioned anode electrode sheet further includes a third active material layer disposed on a second side of the current collector, wherein the third active material layer includes a metallic lithium alloy.

In some embodiments of the present application, the first active material layer is disposed on the first conductive layer, and the third active material layer is disposed on the second conductive layer.

In some embodiments of the present application, the aforementioned anode electrode sheet further includes a second artificial SEI layer disposed on a side of the third active material layer away from the current collector, and the second artificial SEI layer includes a lithide.

In some embodiments of the present application, the aforementioned anode electrode sheet further includes a fourth active material layer and a third artificial SEI layer, wherein the fourth active material layer and the third artificial SEI layer are sequentially arranged on the second side of the current collector in a direction away from the current collector, the fourth active material layer includes metallic lithium, and the third artificial SEI layer includes a lithide and a metallic lithium alloy.

In some embodiments of the present application, the first active material layer is disposed on the first conductive layer, and the fourth active material layer is disposed on the second conductive layer.

In some embodiments of the present application, the aforementioned anode electrode sheet further includes a fifth active material layer and a sixth active material layer, wherein the fifth active material layer and the sixth active material layer are sequentially disposed on a second side of the current collector in a direction away from the current collector, the fifth active material layer includes metallic lithium, and the sixth active material layer includes a metallic lithium alloy.

In some embodiments of the present application, the first active material layer is disposed on the first conductive layer, and the fifth active material layer is disposed on the second conductive layer.

In some embodiments of the present application, the aforementioned anode electrode sheet further includes a fourth artificial SEI layer disposed on a side of the sixth active material layer away from the current collector, and the fourth artificial SEI layer includes a lithide.

In some embodiments of the present application, the metallic lithium alloy includes an alloy formed from metallic lithium and at least one selected from the group consisting of gold, indium, magnesium, zinc, chromium, nickel, molybdenum, tungsten, vanadium, titanium, niobium, zirconium, cobalt, manganese, aluminum, copper, boron, silver, tin, silicon, carbon, phosphorus, and bismuth. Thus, it can address the problems such as the growth of lithium dendrites caused by nonuniform deposition of metallic lithium on the surface of the anode electrode, the continuous thickening of the SEI film, dead lithium, and penetration of the separator by lithium dendrites, etc., during the cycle process of a lithium metal battery.

In some embodiments of the present application, the content of lithium element in the metallic lithium alloy is 0.1 atm% to 99.9 atm%. Thus, it can address the problems such as the growth of lithium dendrites caused by nonuniform deposition of metallic lithium on the surface of the anode electrode, the continuous thickening of the SEI film, dead lithium, and penetration of the separator by lithium dendrites, etc., during the cycle process of a lithium metal battery.

In some embodiments of the present application, the thicknesses of the first active material layer, the second active material layer, and the third active material layer are separately and independently 0.1 µm to 100 µm.

In some embodiments of the present application, the fourth active material layer has a thickness of 0.1 µm to 100 µm.

In some embodiments of the present application, the thicknesses of the fifth active material layer and the sixth active material layer are separately and independently 0.1 µm to 100 µm.

In some embodiments of the present application, the lithide includes a compound of at least one selected from the group consisting of halogen, oxygen, nitrogen, sulfur, and phosphorus elements with lithium. Thereby, it can effectively avoid the problems such as the growth of lithium dendrites caused by the delayed deintercalation of lithium ions at the anode electrode, and continuous thickening of the SEI film due to infinitely large rate of volume change, dead lithium, and penetration of the separator by lithium dendrites, etc.

In some embodiments of the present application, the metallic lithium alloy in the third artificial SEI layer includes Li-M, wherein M includes at least one selected from the group consisting of gold, indium, magnesium, zinc, chromium, nickel, molybdenum, tungsten, vanadium, titanium, niobium, zirconium, cobalt, manganese, aluminum, copper, silver, tin, and bismuth, and the molar ratio of lithide to Li-M in the third artificial SEI layer is (0.1-10):1.

In some embodiments of the present application, the thicknesses of the first artificial SEI layer and the second artificial SEI layer are separately and independently 0.1 µm to 1 µm.

In some embodiments of the present application, the third artificial SEI layer has a thickness of 0.1 µm to 1 µm.

In some embodiments of the present application, the fourth artificial SEI layer has a thickness of 0.1 µm to 1 µm.

In a second aspect of the present application, the present application proposes a method for preparing an anode electrode sheet. According to an embodiment of the present application, the method includes:
providing a current collector, wherein the current collector includes a first side and a second side opposite to each other;
forming a first active material layer on a first side of the current collector, wherein the first active material layer includes metallic lithium;
forming a second active material layer on a side of the first active material layer away from the current collector, wherein the second active material layer includes a metallic lithium alloy; and
forming a first artificial SEI layer on a side of the second active material layer away from the first active material layer, wherein the first artificial SEI layer includes a lithide.

According to the above embodiments of the present application, the method for preparing an anode electrode sheet involves providing a current collector including a first side and a second side opposite to each other and forming a first active material layer on the first side of the current collector, forming a second active material layer on the side of the first active material layer away from the current collector, and forming a first artificial SEI layer on the side of the second active material layer away from the first active material layer. The first active material layer includes metallic lithium, which can serve as a supplemental lithium source to improve the cycle life of the battery, and the second active material layer includes a metallic lithium alloy, which, on the one hand, can prevent the highly reactive metallic lithium in the first active material layer from directly contacting the electrolytic solution or electrolyte, and on the other hand can allow an alloying reaction to occur between the metallic lithium and the metallic lithium alloy in the second active material layer during the charge and discharge processes of the battery, facilitating the uniform deposition of metallic lithium, and thus effectively avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc. The first artificial SEI layer includes a lithide, which, on the one hand, can further prevent the highly reactive metallic lithium in the first active material layer from directly contacting the electrolytic solution or electrolyte, and on the other hand, can promote the rapid migration of lithium ions, thereby effectively preventing the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc. Thereby, the anode electrode sheet obtained by using the method for preparing the anode electrode sheet of the present application can improve the interfacial problems of the application of metallic lithium in a secondary battery, avoiding the problems such as continuous thickening of the SEI film, persistent growth of lithium dendrites, dead lithium, and penetration of the separator by lithium dendrites, etc., thereby being conducive to improving the cycle stability of a lithium metal battery employing such an anode electrode sheet.

In addition, according to the above embodiments of the present application, the method for preparing the anode electrode sheet may also have the following additional technical features:
In some embodiments of the present application, the aforementioned method further includes: forming a fourth active material layer on the second side of the current collector, wherein the fourth active material layer includes metallic lithium; and forming a third artificial SEI layer on a side of the fourth active material layer away from the current collector, wherein the third artificial SEI layer includes a lithide and a metallic lithium alloy. Thereby, the cycle stability of the lithium metal battery can be improved.

In some embodiments of the present application, the aforementioned method further includes: forming a fifth active material layer on the second side of the current collector, wherein the fifth active material layer includes metallic lithium; forming a sixth active material layer on a side of the fifth active material layer away from the current collector, wherein the sixth active material layer includes a metallic lithium alloy; forming a fourth artificial SEI layer on a side of the sixth active material layer away from the fifth active material layer, wherein the fourth artificial SEI layer includes a lithide. Thereby, the cycle stability of the lithium metal battery can be improved.

In a third aspect of the present application, the present application proposes a lithium metal battery. According to an embodiment of the present application, the lithium metal battery includes the aforementioned anode electrode sheet or the anode electrode sheet obtained by the method for preparing the anode electrode sheet described above. Thereby, the lithium metal battery exhibits high cycle stability.

In addition, according to the above embodiments of the present application, the lithium metal battery may also have the following additional technical features:
in some embodiments of the present application, the lithium metal battery includes a liquid-state battery, a semi-solid-state battery, and an all-solid-state battery.

In some embodiments of the present application, the lithium metal battery includes a liquid-state battery and a semi-solid-state battery, wherein the liquid-state battery and the semi-solid-state battery include an electrolytic solution, and the electrolytic solution includes a lithium salt and a solvent.

In some embodiments of the present application, the lithium salt includes at least one selected from the group consisting of lithium hexafluorophosphate, lithium perchlorate, lithium tetrafluoroborate, lithium hexafluoroarsenate, lithium trifluoromethanesulfonate, lithium bis(trifluoromethanesulfonyl)imide, lithium bis(fluorosulfonyl)imide, lithium trifluoromethanesulfonyl-n-perfluorobutylsulfonylimide, lithium fluorosulfonyl-n-perfluorobutylsulfonylimide, lithium bis(oxalate)borate, and lithium tris(trifluoromethanesulfonyl)methide.

In some embodiments of the present application, the solvent includes at least one selected from the group consisting of ethylene carbonate, propylene carbonate, butylene carbonate, dimethyl carbonate, diethyl carbonate, ethyl methyl carbonate, γ-butyrolactone, tetrahydrofuran, 2-methyltetrahydrofuran, dimethoxy dimethyl ether, 1,2-dimethoxyethane, 1,3-dioxolane, and acetonitrile.

In some embodiments of the present application, the electrolytic solution further includes an additive, the additive includes at least one selected from the group consisting of a film-forming additive, a conductive additive, a flame-retardant additive, an overcharge protection additive, an additive for controlling water and HF content, a low-temperature additive, and an anode electrode stabilizer.

In some embodiments of the present application, the lithium metal battery includes a semi-solid-state battery and an all-solid-state battery, wherein the semi-solid-state battery and the all-solid-state battery include an electrolyte, and the electrolyte includes at least one selected from the group consisting of an inorganic solid-state electrolyte, a polymer solid-state electrolyte, and a composite solid-state electrolyte; and the inorganic solid-state electrolyte includes at least one selected from the group consisting of an oxide solid-state electrolyte, a sulfide solid-state electrolyte, and a halide solid-state electrolyte.

In a fourth aspect of the present application, the present application proposes a method for preparing a lithium metal battery. According to an embodiment of the present application, the method includes: providing an anode electrode sheet, wherein the anode electrode sheet includes a current collector having a first side and a second side opposite to each other, a first active material layer, a second active material layer, and a first artificial SEI layer are sequentially arranged on the first side of the current collector in a direction away from the current collector, the first active material layer includes metallic lithium, the second active material layer includes a metallic lithium alloy, and the first artificial SEI layer includes a lithide, a fourth active material layer and a metal compound layer are sequentially arranged on the second side of the current collector in a direction away from the current collector, the fourth active material layer includes metallic lithium; assembling the anode electrode sheet into a battery and charging it to enable the metal compound layer to form a third artificial SEI layer in situ during the charge process of the battery, wherein the third artificial SEI layer includes a lithide and a metallic lithium alloy, and wherein the metal compound layer includes a compound of at least one selected from the group consisting of halogen, oxygen, nitrogen, sulfur, and phosphorus elements with M, and M includes at least one selected from the group consisting of gold, indium, magnesium, zinc, chromium, nickel, molybdenum, tungsten, vanadium, titanium, niobium, zirconium, cobalt, manganese, aluminum, copper, silver, tin, and bismuth. Thereby, the lithium metal battery obtained by this method has high cycle stability and effectively avoids the complexity degree of the process caused by multilayer deposition.

In a fifth aspect of the present application, the present application proposes an electrical device. According to an embodiment of the present application, the electrical device includes the lithium metal battery described above or the lithium metal battery obtained by the method for preparing the lithium metal battery described above. The advantages of the electrical device and the lithium metal battery described above or the method for preparing the lithium metal battery described above over the prior art will not be reiterated here.

Additional aspects and advantages of the present application will be partially set forth in the following description, partially become apparent from the description below, or be learned through practice of the present application.

### BRIEF DESCRIPTION OF THE DRAWINGS

The above and/or additional aspects and advantages of the present application will become apparent and readily understood from the description of the embodiments in conjunction with the accompanying drawings, in which:
FIG. 1 is a structural schematic diagram of an anode electrode sheet according to one embodiment of the present application;
FIG. 2 is a structural schematic diagram of a current collector according to one embodiment of the present application;
FIG. 3 is a structural schematic diagram of an anode electrode sheet according to another embodiment of the present application;
FIG. 4 is a structural schematic diagram of an anode electrode sheet according to yet another embodiment of the present application;
FIG. 5 is a structural schematic diagram of an anode electrode sheet according to yet another embodiment of the present application;
FIG. 6 is a structural schematic diagram of an anode electrode sheet according to yet another embodiment of the present application;
FIG. 7 is a structural schematic diagram of an anode electrode sheet according to yet another embodiment of the present application;
FIG. 8 is a structural schematic diagram of an anode electrode sheet according to yet another embodiment of the present application; and
FIG. 9 is a schematic flowchart of a method for preparing an anode electrode sheet according to one embodiment of the present application.

Reference numerals:
1000-anode electrode sheet; 10-current collector; 11-base film; 12-first conductive layer; 13-second conductive layer; 20-first active material layer; 30-second active material layer; 40-first artificial sei layer; 50-third active material layer; 60-second artificial sei layer; 70-fourth active material layer; 80-third artificial sei layer; 90-fifth active material layer; 100-sixth active material layer; 110-fourth artificial sei layer.

### DETAILED DESCRIPTION

The embodiments of the present application will be described in detail below, and examples of the embodiments will be illustrated in the accompanying drawings, wherein the same or similar reference numerals denote the same or similar elements or elements having the same or similar functions throughout the invention. The embodiments described below with reference to the accompanying drawings are exemplary and intended to explain the present application, but should not be construed as limitations on the present application.

In the description of the present application, it is to be understood that the terms such as "center", "longitudinal", "lateral", "length", "width", "thickness", "upper", "lower", "front", "rear", "left", "right", "vertical", "horizontal", "top", "bottom", "inner", "outer", "clockwise", "counter-clockwise", "axial", "radial", and "circumferential", and the like indicating orientation or positional relationships are based on the orientation or positional relationships shown in the accompanying drawings. These terms are used merely for the purpose of facilitating the description of the present application and simplifying the description, and do not indicate or imply that the referred device or element must have a specific orientation or be constructed and operated in a specific orientation, therefore, they should not be construed as limitations on the present application.

In addition, the terms "first" and "second" are used merely for descriptive purposes and should not be construed as indicating or implying relative importance or implicitly specifying the quantity of the technical features indicated. Thus, the features defined with "first" and "second" may explicitly or implicitly include at least one such a feature. In the description of the present application, the term "a plurality of" refers to at least two, such as two, and three, etc., unless explicitly and specifically limited otherwise.

In the present application, unless otherwise specified and limited, the terms "installation", "interconnection", "connection", "fixation", and the like should be understood in a broad sense, for example, it can be either fixed connection, or detachable connection, or integrated connection; it can also can either mechanical connection or electrical connection; and it can be either direct connection, or indirect connection through intermediate media, or it can be the interior communication between two components or the interactive relationship between two components, unless explicitly limited otherwise. For a person of ordinary skill in the art, the specific meanings of the above-mentioned terms in the present application can be understood according to specific circumstances.

In the present application, unless explicitly specified and limited otherwise, a first feature being "on" or "under" a second feature may mean that the first and second features are in direct contact, or that the first and second features are in indirect contact through an intermediate medium. Moreover, the first feature being "on", "above" or "over" the second feature may indicate that the first feature is directly above or obliquely above the second feature, or merely indicate that the horizontal level of the first feature is higher than that of the second feature. The first feature being "under", "below" or "beneath" the second feature may indicate that the first feature is directly below or obliquely below the second feature, or merely indicate that the horizontal level of the first feature is lower than that of the second feature.

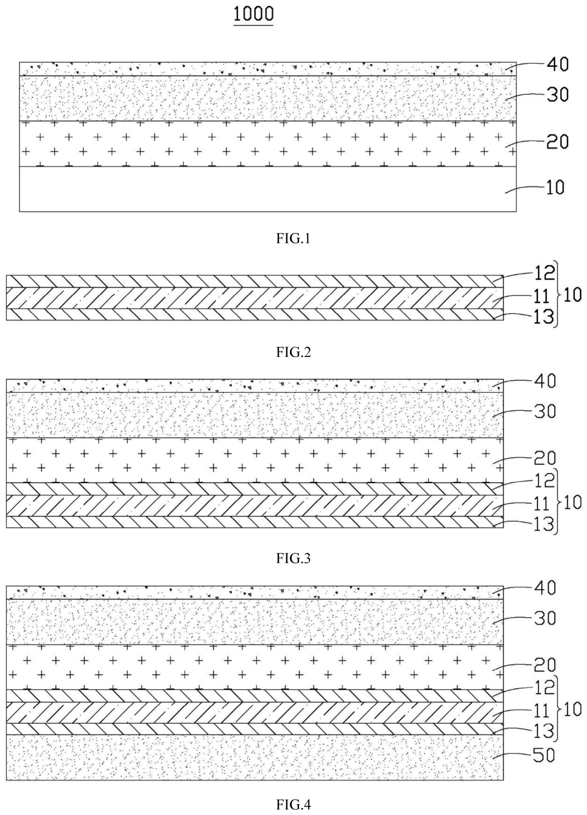

In a first aspect of the present application, the present application provides an anode electrode sheet. According to an embodiment of the present application, referring to FIG. 1, the anode electrode sheet 1000 includes a current collector 10, a first active material layer 20, a second active material layer 30, and a first artificial SEI (solid electrolyte membrane) layer 40.

According to an embodiment of the present application, the current collector 10 includes a first side and a second side opposite to each other. It should be noted that the specific type and thickness of the current collector 10 are not particularly limited, and those skilled in the art can make selections based on actual needs. For example, the current collector 10 may be a metal foil current collector or a composite current collector, and the thickness of the current collector 10 may be 1 µm to 10 µm, such as 1 µm, 2 µm, 3 µm, 4 µm, 5 µm, 6 µm, 7 µm, 8 µm, 9 µm, and 10 µm, etc. The thickness of the metal foil current collector is preferably 4 µm to 10 µm.

According to a specific embodiment of the present application, the current collector 10 is a metal foil current collector, which may include at least one of copper, aluminum, zinc, nickel, and chromium. Optionally, the metal foil current collector includes at least one of copper, nickel, copper-nickel alloy, and copper-zinc alloy.

According to a specific embodiment of the present application and referring to FIG. 2, the current collector 10 is a composite current collector including a base film 11, a first conductive layer 12, and a second conductive layer 13.

According to a specific embodiment of the present application, the material of the base film 11 is a polymer. The material of the base film 11 is a polymer, which has a lower density than the metal foils such as copper foil, and thus the current collector 10 produced therefrom also has a lower density than the current collectors made from metal foils such as copper foil, etc., thereby increasing the energy density of the battery.

It should be noted that the specific type of the aforementioned base film 11 is not particularly limited, and those skilled in the art may make selections according to actual needs. For example, it may include at least one of polyethylene (PE), polyethylene terephthalate (PET), polyimide (PI), polypropylene (PP), polyamide (PA), polyphenylene sulfide (PPS), and polyethylene naphthalate (PEN). Optionally, the base film 11 includes at least one of PET, PP, and PI. Additionally, optionally, the base film 11 includes PI and/or PPS, which possess flame retardant efficiency, thereby reducing the problem of fire caused by short circuit due to the piercing of film by lithium dendrites.

According to a specific embodiment of the present application, the thickness of the aforementioned base film 11 may be 1 µm to 10 µm, for example, it may be 1 µm, 2 µm, 3 µm, 4 µm, 5 µm, 6 µm, 7 µm, 8 µm, 9 µm, and 10 µm, etc.

According to a specific embodiment of the present application and referring to FIG. 2, the first conductive layer 12 is disposed on one side of the base film 11, and by disposing the first conductive layer 12 on one side of the base film 11, the electrical conductivity of the current collector 10 may be improved.

It should be noted that the material and thickness of the first conductive layer 12 are not particularly limited, and those skilled in the art can make selections based on actual needs, as long as it possesses excellent electrical conductivity and mechanical properties. For example, the material of the first conductive layer 12 may include at least one of copper, aluminum, zinc, nickel, and chromium, and the thickness of the first conductive layer 12 may be 0.3 µm to 10 µm, such as 0.3 µm, 0.5 µm, 1 µm, 2 µm, 3 µm, 4 µm, 5 µm, 6 µm, 7 µm, 8 µm, 9 µm, and 10 µm, etc.

According to a specific embodiment of the present application and referring to FIG. 2, the second conductive layer 13 is disposed on the opposite other side of the base film 11, and by disposing the second conductive layer 13 on the opposite other side of the base film 11, the electrical conductivity of the current collector 10 may be further improved.

It should be noted that the material and thickness of the second conductive layer 13 are not particularly limited, and those skilled in the art can make selections based on actual needs, as long as it possesses excellent electrical conductivity and mechanical properties. For example, the material of the second conductive layer 13 may include at least one of copper, aluminum, zinc, nickel, and chromium, and the thickness of the second conductive layer 13 may be 0.3 µm to 10 µm, such as 0.3 µm, 0.5 µm, 1 µm, 2 µm, 3 µm, 4 µm, 5 µm, 6 µm, 7 µm, 8 µm, 9 µm, and 10 µm, etc.

According to a specific embodiment of the present application, the first conductive layer 12 and the second conductive layer 13 may be separately and independently prepared by physical vapor deposition (PVD), chemical vapor deposition (CVD), or water electroplating methods. For example, when copper is used as the first conductive layer 12 or the second conductive layer 13, it may be prepared on the base film 11 using a one-step method, two-step method, or three-step method. The one-step method includes the one-step chemical deposition method, the one-step vacuum magnetron sputtering method, and the one-step vacuum evaporation method. The one-step chemical deposition method deposits the copper layer through chemical reactions, the one-step vacuum magnetron sputtering method deposits the copper layer through repeated magnetron sputtering, and the one-step vacuum evaporation method deposits the copper layer through repeated evaporation; the two-step method involves first using magnetron sputtering for the base layer, followed by water electroplating to complete the thickening of the copper layer; and the three-step method involves first using magnetron sputtering for the base layer, followed by vacuum evaporation, and finally water electroplating to complete the thickening of the copper layer.

Thereby, by employing the composite current collector as the current collector 10, the anode electrode sheet 1000 of the present application may improve the mechanical strength and mechanical properties of the anode electrode sheet 1000 on the one hand, and on the other hand, compared to the current collectors made from metal foils such as copper foil, etc., the composite current collector has the characteristics of lower manufacturing costs, higher safety, and better compatibility, etc., and yet on the other hand, the density of the composite current collector is lower than that of the current collectors made from metal foils such as copper foil, etc. (with a weight reduction by over 60%), which may improve the energy density of the battery.

According to an embodiment of the present application and referring to FIG. 1, a first active material layer 20, a second active material layer 30, and a first artificial SEI layer 40 are sequentially arranged on the first side of the current collector 10 in a direction away from the current collector 10, the first active material layer 20 includes metallic lithium, the second active material layer 30 includes a metallic lithium alloy, and the first artificial SEI layer 40 includes a lithide. The inventors have discovered that by sequentially arranging a first active material layer 20, a second active material layer 30, and a first artificial SEI layer 40 on the first side of the current collector 10 in a direction away from the current collector 10, the first active material layer 20 includes metallic lithium, which may serve as a supplemental lithium source to improve the cycle life of the battery, and the second active material layer 30 includes a metallic lithium alloy, which, on the one hand, may prevent the highly reactive metallic lithium in the first active material layer 20 from directly contacting the electrolytic solution or electrolyte, and on the other hand may allow an alloying reaction to occur between the metallic lithium and the metallic lithium alloy in the second active material layer 30 during the charge and discharge processes of the battery, facilitating the uniform deposition of metallic lithium, and thus effectively avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc., and the first artificial SEI layer 40 includes a lithide, which, on the one hand, may further prevent the highly reactive metallic lithium in the first active material layer 20 from directly contacting the electrolytic solution or electrolyte, and on the other hand, may promote the rapid migration of lithium ions, thereby effectively preventing the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc., thereby being conducive to improving the cycle stability of a lithium metal battery employing such an anode electrode sheet 1000.

According to a specific embodiment of the present application and referring to FIG. 3, the first active material layer 20 may be disposed on the first conductive layer 12.

It should be noted that the thicknesses of the first active material layer 20, the second active material layer 30, and the first artificial SEI layer 40 are not particularly limited, and those skilled in the art can make selections according to actual needs. As a preferred embodiment, the thicknesses of the first active material layer 20 and the second active material layer 30 may be separately and independently 0.1 µm to 100 µm, for example, it may be 0.1 µm, 0.5 µm, 1 µm, 5 µm, 10 µm, 20 µm, 30 µm, 40 µm, 50 µm, 60 µm, 70 µm, 80 µm, 90 µm, and 100 µm, etc., and the thickness of the first artificial SEI layer 40 may be 0.1 µm to 1 µm, for example, it may be 0.1 µm, 0.2 µm, 0.3 µm, 0.4 µm, 0.5 µm, 0.6 µm, 0.7 µm, 0.8 µm, 0.9 µm, and 1 µm, etc.

According to a specific embodiment of the present application, the specific composition of the metallic lithium alloy is not particularly limited, and those skilled in the art can make selections according to actual needs. For example, it may include an alloy formed from metallic lithium and at least one of gold, indium, magnesium, zinc, chromium, nickel, molybdenum, tungsten, vanadium, titanium, niobium, zirconium, cobalt, manganese, aluminum, copper, boron, silver, tin, silicon, carbon, phosphorus, and bismuth. Specifically, the content of lithium element in the aforementioned metallic lithium alloy may be 0.1 atm% to 99.9 atm%, for example, it may be 0.1 atm%, 1 atm%, 2 atm%, 5 atm%, 15 atm%, 25 atm%, 35 atm%, 45 atm%, 55 atm%, 65 atm%, 75 atm%, 85 atm%, 95 atm%, and 99.9 atm%, etc. Thus, it may address the problems such as the growth of lithium dendrites caused by nonuniform deposition of metallic lithium on the surface of the anode electrode, the continuous thickening of the SEI film, dead lithium, and penetration of the separator by lithium dendrites, etc., during the cycle process of a lithium metal battery.

According to a specific embodiment of the present application, the particular type of the lithide is not particularly limited, and those skilled in the art can make selections based on actual needs, for example it may include a compound of at least one of halogen (e.g., fluorine), oxygen, nitrogen, sulfur, and phosphorus elements with lithium element. Optionally, the lithide may include at least one of lithium fluoride (LiF), lithium oxide (Li₂O), lithium sulfide (Li₂S), lithium nitride (Li₃N), lithium phosphide (Li₃P), and lithium phosphorus oxynitride (LiPON).

According to a specific embodiment of the present application and referring to FIG. 4, the aforementioned anode electrode sheet 1000 further includes a third active material layer 50 disposed on a second side of the current collector 10, wherein the third active material layer 50 includes a metallic lithium alloy. By disposing a third active material layer 50 including a metallic lithium alloy on the second side of the current collector 10, it may allow an alloying reaction to occur between the metallic lithium and the metallic lithium alloy in the third active material layer 50 during the charge and discharge processes of the battery, further facilitating the uniform deposition of metallic lithium, and thus avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc., thereby being further conducive to improving the cycle stability of a lithium metal battery employing such an anode electrode sheet 1000. Specifically, the third active material layer 50 may be disposed on the second conductive layer 13.

It should be noted that the thickness of the third active material layer 50 is not particularly limited, and those skilled in the art can make selections according to actual needs. As a preferred embodiment, the thickness of the third active material layer 50 may be 0.1 µm to 100 µm, for example, it may be 0.1 µm, 0.5 µm, 1 µm, 5 µm, 10 µm, 20 µm, 30 µm, 40 µm, 50 µm, 60 µm, 70 µm, 80 µm, 90 µm, and 100 µm, etc.

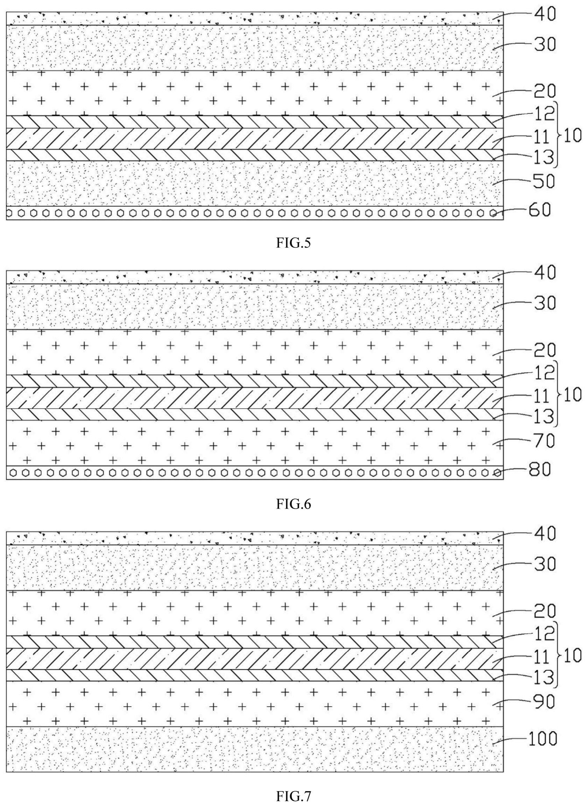

According to a specific embodiment of the present application and referring to FIG. 5, the aforementioned anode electrode sheet 1000 further includes a second artificial SEI layer 60 disposed on a side of the third active material layer 50 away from the current collector 10, and the second artificial SEI layer 60 includes a lithide. By disposing the second artificial SEI layer 60 including a lithide on the side of the third active material layer 50 away from the current collector 10, it may further facilitate the rapid migration of lithium ions, thereby effectively avoiding the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc., thereby being further conducive to improving the cycle stability of a lithium metal battery employing such an anode electrode sheet 1000.

It should be noted that the thickness of the second artificial SEI layer 60 is not particularly limited, and those skilled in the art can make selections according to actual needs. As a preferred embodiment, the thickness of the second artificial SEI layer 60 may be 0.1 µm to 1 µm, for example it may be 0.1 µm, 0.2 µm, 0.3 µm, 0.4 µm, 0.5 µm, 0.6 µm, 0.7 µm, 0.8 µm, 0.9 µm, and 1 µm, etc.

According to a specific embodiment of the present application and referring to FIG. 6, the aforementioned anode electrode sheet 1000 further includes a fourth active material layer 70 and a third artificial SEI layer 80, wherein the fourth active material layer 70 and the third artificial SEI layer 80 are sequentially arranged on the second side of the current collector 10 in a direction away from the current collector 10, the fourth active material layer 70 includes metallic lithium, and the third artificial SEI layer 80 includes a lithide and a metallic lithium alloy. By sequentially arranging a fourth active material layer 70 and a third artificial SEI layer 80 on the second side of the current collector 10 in a direction away from the current collector 10, the fourth active material layer 70 includes metallic lithium, which may serve as a supplemental lithium source to improve the cycle life of the battery, and the third artificial SEI layer 80 includes a lithide and a metallic lithium alloy, the third artificial SEI layer 80, on the one hand, may prevent the highly reactive metallic lithium in the fourth active material layer 70 from directly contacting the electrolytic solution or electrolyte, and on the other hand the lithide in the third artificial SEI layer 80 may further facilitate the rapid migration of lithium ions, thereby effectively avoiding the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc., on the other hand, the metallic lithium alloy in the third artificial SEI layer 80 may undergo an alloying reaction with the metallic lithium during the charge and discharge processes of the battery, further facilitating the uniform deposition of metallic lithium, and thus effectively avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc., thereby being further conducive to improving the cycle stability of a lithium metal battery employing such an anode electrode sheet 1000. Specifically, the fourth active material layer 70 may be disposed on the second conductive layer 13.

According to a specific embodiment of the present application, in the third artificial SEI layer 80, the lithide may include a compound of at least one of halogen, oxygen, nitrogen, sulfur, and phosphorus elements with lithium element, and the metallic lithium alloy may include Li-M, wherein M includes at least one of gold, indium, magnesium, zinc, chromium, nickel, molybdenum, tungsten, vanadium, titanium, niobium, zirconium, cobalt, manganese, aluminum, copper, silver, tin, and bismuth, and the molar ratio of lithide to Li-M in the third artificial SEI layer 80 may be (0.1-10):1, for example, it may be 0.1:1, 0.5:1, 1:1, 2:1, 3:1, 4:1, 5:1, 6:1, 8:1, and '10:1, etc.

It should be noted that the thicknesses of the fourth active material layer 70 and the third artificial SEI layer 80 are not particularly limited, and those skilled in the art can make selections according to actual needs. As a preferred embodiment, the thickness of the fourth active material layer 70 may be 0.1 µm to 100 µm, for example, it may be 0.1 µm, 0.5 µm, 1 µm, 5 µm, 10 µm, 20 µm, 30 µm, 40 µm, 50 µm, 60 µm, 70 µm, 80 µm, 90 µm, and 100 µm, etc., and the thickness of the third artificial SEI layer 80 may be 0.1 µm to 1 µm, for example, it may be 0.1 µm, 0.2 µm, 0.3 µm, 0.4 µm, 0.5 µm, 0.6 µm, 0.7 µm, 0.8 µm, 0.9 µm, and 1 µm, etc.

According to a specific embodiment of the present application and referring to FIG. 7, the aforementioned anode electrode sheet 1000 further includes a fifth active material layer 90 and a sixth active material layer 100, wherein the fifth active material layer 90 and the sixth active material layer 100 are sequentially disposed on the second side of the current collector 10 in a direction away from the current collector 10, the fifth active material layer 90 includes metallic lithium, and the sixth active material layer 100 includes a metallic lithium alloy. By sequentially arranging a fifth active material layer 90 and a sixth active material layer 100 on the second side of the current collector 10 in a direction away from the current collector 10, the fifth active material layer 90 includes metallic lithium, which may serve as a supplemental lithium source to improve the cycle life of the battery, and the sixth active material layer 100 includes a metallic lithium alloy, which, on the one hand, may avoid the highly reactive metallic lithium in the fifth active material layer 90 to directly contact the electrolytic solution or electrolyte, and on the other hand may allow an alloying reaction to occur between the metallic lithium and the metallic lithium alloy in the sixth active material layer 100 during the charge and discharge processes of the battery, facilitating the uniform deposition of metallic lithium, and thus effectively avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc., thereby being conducive to improving the cycle stability of a lithium metal battery employing such an anode electrode sheet 1000. Specifically, the fifth active material layer 90 may be disposed on the second conductive layer 13.

It should be noted that the thicknesses of the fifth active material layer 90 and the sixth active material layer 100 are not particularly limited, and those skilled in the art can make selections according to actual needs. As a preferred embodiment, the thicknesses of the fifth active material layer 90 and the sixth active material layer 100 may be separately and independently 0.1 µm to 100 µm, for example, it may be 0.1 µm, 0.5 µm, 1 µm, 5 µm, 10 µm, 20 µm, 30 µm, 40 µm, 50 µm, 60 µm, 70 µm, 80 µm, 90 µm, and 100 µm, etc.

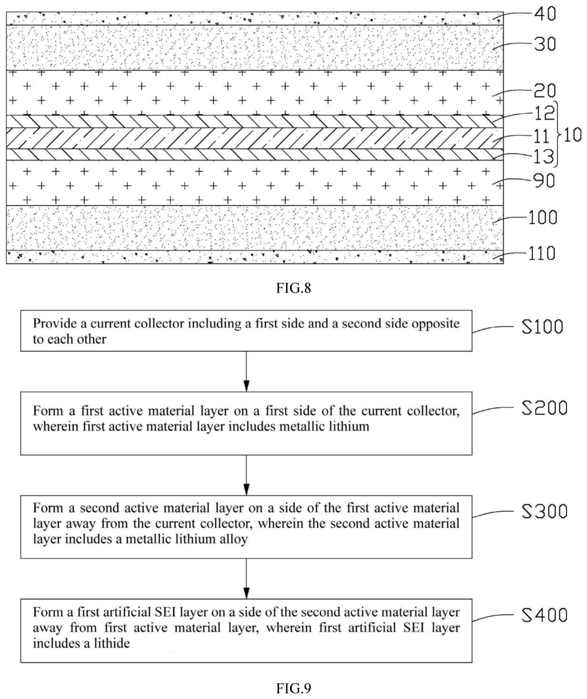

According to a specific embodiment of the present application and referring to FIG. 8, the aforementioned anode electrode sheet 1000 further includes a fourth artificial SEI layer 110 disposed on a side of the sixth active material layer 100 away from the current collector 10, and the fourth artificial SEI layer 110 includes a lithide. By disposing the fourth artificial SEI layer 110 including a lithide on the side of the sixth active material layer 100 away from the current collector 10, it may further facilitate the rapid migration of lithium ions, thereby effectively avoiding the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc., thereby being further conducive to improving the cycle stability of a lithium metal battery employing such an anode electrode sheet 1000.

It should be noted that the thickness of the fourth artificial SEI layer 110 is not particularly limited, and those skilled in the art can make selections according to actual needs. As a preferred embodiment, the thickness of the fourth artificial SEI layer 110 may be 0.1 µm to 1 µm, for example it may be 0.1 µm, 0.2 µm, 0.3 µm, 0.4 µm, 0.5 µm, 0.6 µm, 0.7 µm, 0.8 µm, 0.9 µm, and 1 µm, etc.

According to a specific embodiment of the present application, the first active material layer 20, the second active material layer 30, the third active material layer 50, the fourth active material layer 70, the fifth active material layer 90, and the sixth active material layer 100 may be separately and independently prepared by a rolling (i.e., rolling a metal strip as the active material layer onto the surface of a current collector or another active material layer) or a physical vapor deposition (PVD, such as magnetron sputtering, and vacuum evaporation, etc.) method, preferably the physical vapor deposition method. Thereby, it is conducive to reducing the thickness of the active material layer, achieving uniform deposition, and thereby reducing the used amount of the active material and lowering the costs of the battery. Optionally, the metallic lithium alloy Li-M may be prepared by sputtering the metal M onto the surface of a metallic Li layer through magnetron sputtering to create an active material layer including the metallic lithium alloy. Additionally optionally, the metallic lithium alloy Li-M may be prepared by a vacuum evaporation method, that is, the metallic Li and metallic M in the shape of strips or blocks, etc., are placed in a container (e.g., evaporation boats, and crucibles, etc.), and taking into account the melting points of metallic Li and metallic M, and on the premise of setting reasonable pressure in the evaporation chamber and temperature of substrates, different evaporation methods (e.g., resistance heating, electron beam evaporation, high-frequency heating, and laser heating, etc.) and varying evaporation temperatures may be employed to control the composition and deposition rate of the metallic lithium alloy.

According to a specific embodiment of the present application, the first artificial SEI layer 40, the second artificial SEI layer 60, and the fourth artificial SEI layer 110 may be directly formed into a layer of compound formed of metallic lithium with halogen, oxygen, nitrogen, sulfur, and phosphorus elements, etc., such as lithium fluoride, lithium oxide, lithium nitride, lithium sulfide, and lithium phosphide, etc., by separately and independently using physical vapor deposition (PVD), chemical vapor deposition (CVD), and atomic layer deposition (ALD) methods, etc. Further, the magnetron sputtering of lithium phosphate (Li₃PO₄) under a nitrogen atmosphere may generate lithium phosphorus oxynitride (LiPON). In addition, the methods such as dry coating or wet coating, etc., may be used to directly coat a compound formed of lithium element with halogen, oxygen, nitrogen, sulfur and phosphorus elements onto the surface of the anode electrode, such as at least one of lithium fluoride (LiF), lithium oxide (Li₂O), lithium sulfide (Li₂S), lithium nitride (Li₃N), lithium phosphide (Li₃P), and lithium phosphorus oxynitride (LiPON).

According to a specific embodiment of the present application, the third artificial SEI layer 80 may be formed by an in-situ method, that is, involving forming a metallic compound layer comprising a compound of at least one of halogen, oxygen, nitrogen, sulfur, and phosphorus elements with M on the fourth active material layer 70 including metallic lithium, so that the metallic compound layer reacts with the lithium atoms originating from the positive electrode during the charge process of the battery to generate a lithide and a metallic lithium alloy.

Therefore, using the anode electrode sheet 1000 of the present application may improve the interfacial problems of the application of metallic lithium in a secondary battery, avoiding the problems such as continuous thickening of the SEI film, persistent growth of lithium dendrites, dead lithium, and penetration of the separator by lithium dendrites, etc., thereby being conducive to improving the cycle stability of a lithium metal battery employing such an anode electrode sheet 1000.

In a second aspect of the present application, the present application proposes a method for preparing an anode electrode sheet. According to an embodiment of the present application and referring to FIG. 9, the method includes:
S100: providing a current collector, wherein the current collector includes a first side and a second side opposite to each other

In this step, a current collector 10 is provided, and the current collector 10 includes a first side and a second side opposite to each other. It should be noted that the specific method for preparing the current collector 10 is not particularly limited, and may include, for example: forming a first conductive layer 12 on a side of the base film 11; and forming a second conductive layer 13 on a side of the base film 11 away from the first conductive layer 12. By forming a first conductive layer 12 on a side of the base film 11, the electrical conductivity of the current collector 10 may be improved, while by forming a second conductive layer 13 on the opposite other side of the base film 11, the electrical conductivity of the current collector 10 may be further improved.

S200: forming a first active material layer on a first side of the current collector, wherein first active material layer includes metallic lithium

In this step, a first active material layer 20 is formed on a first side of the current collector 10, wherein the first active material layer 20 includes metallic lithium. The inventors have discovered that by forming a first active material layer 20 including metallic lithium on the first side of the current collector 10, it may serve as a supplemental lithium source to improve the cycle life of the battery.

According to a specific embodiment of the present application, the aforementioned first active material layer 20 may be formed on the first conductive layer 12.

S300: forming a second active material layer on a side of the first active material layer away from the current collector, wherein the second active material layer includes a metallic lithium alloy

In this step, a second active material layer 30 is formed on a side of the first active material layer 20 away from the current collector 10, wherein the second active material layer 30 includes a metallic lithium alloy. The inventors have discovered that by forming a second active material layer 30 including a metallic lithium alloy on a side of the first active material layer 20 away from the current collector 10, which, on the one hand, may avoid the highly reactive metallic lithium in the first active material layer 20 to directly contact the electrolytic solution or electrolyte, and on the other hand may allow an alloying reaction to occur between the metallic lithium and the metallic lithium alloy in the second active material layer 30 during the charge and discharge processes of the battery, facilitating the uniform deposition of metallic lithium, and thus avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc., thereby being conducive to improving the cycle stability of the lithium metal battery.

S400: forming a first artificial SEI layer on a side of the second active material layer away from first active material layer, wherein first artificial SEI layer includes a lithide

In this step, a first artificial SEI layer 40 is formed on a side of the second active material layer 30 away from the first active material layer 20, wherein the first artificial SEI layer 40 includes a lithide. The inventors have discovered that by forming a first artificial SEI layer 40 including a lithide on a side of the second active material layer 30 away from the first active material layer 20, it can, on the one hand, further avoid the highly reactive metallic lithium in the first active material layer 20 to directly contact the electrolytic solution or electrolyte, and on the other hand, it may promote the rapid migration of lithium ions, thereby effectively avoiding the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc., thereby being conducive to improving the cycle stability of the lithium metal battery.

Thereby, the anode electrode sheet obtained by using the method for preparing the anode electrode sheet of the present application may improve the interfacial problems of the application of metallic lithium in a secondary battery, avoiding the problems such as continuous thickening of the SEI film, persistent growth of lithium dendrites, dead lithium, and penetration of the separator by lithium dendrites, etc., thereby being conducive to improving the cycle stability of the lithium metal battery.

It should be noted that the materials and thicknesses of the base film 11, the first conductive layer 12, the second conductive layer 13, the first active material layer 20, the second active material layer 30, and the first artificial SEI layer 40, as well as the preparation methods for the first conductive layer 12, the second conductive layer 13, the first active material layer 20, the second active material layer 30, and the first artificial SEI layer 40, have been described in detail earlier and will not be repeated here.

According to a specific embodiment of the present application, the aforementioned method further includes: forming a fourth active material layer 70 on the second side of the current collector 10, wherein the fourth active material layer 70 includes metallic lithium; forming a third artificial SEI layer 80 on the side of the fourth active material layer 70 away from the current collector 10, wherein the third artificial SEI layer 80 includes a lithide and a metallic lithium alloy. By forming a fourth active material layer 70 including metallic lithium on the second side of the current collector 10, which may serve as a supplemental lithium source to improve the cycle life of the battery, and by forming a third artificial SEI layer 80 including a lithide and a metallic lithium alloy on the side of the fourth active material layer 70 away from the current collector 10, the third artificial SEI layer 80, on the one hand, may avoid the highly reactive metallic lithium in the fourth active material layer 70 to directly contact the electrolytic solution or electrolyte, and on the other hand the lithide in the third artificial SEI layer 80 may further facilitate the rapid migration of lithium ions, thereby effectively avoiding the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc., on the other hand, the metallic lithium alloy in the third artificial SEI layer 80 may undergo an alloying reaction with the metallic lithium during the charge and discharge processes of the battery, further facilitating the uniform deposition of metallic lithium, and thus effectively avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc., thereby being further conducive to improving the cycle stability of the lithium metal battery.

According to a specific embodiment of the present application, the aforementioned method further includes: forming a fifth active material layer 90 on the second side of the current collector 10, wherein the fifth active material layer 90 includes metallic lithium; forming a sixth active material layer 100 on a side of the fifth active material layer 90 away from the current collector 10, wherein the sixth active material layer 100 includes a metallic lithium alloy; and forming a fourth artificial SEI layer 110 on a side of the sixth active material layer 100 away from the fifth active material layer 90, wherein the fourth artificial SEI layer 110 includes a lithide. The inventors have discovered that by forming a fifth active material layer 90 including metallic lithium on the second side of the current collector 10, which may serve as a supplemental lithium source to improve the cycle life of the battery; and by forming a sixth active material layer 100 including a metallic lithium alloy on a side of the fifth active material layer 90 away from the current collector 10, which, on the one hand, may avoid the highly reactive metallic lithium in the fifth active material layer 90 to directly contact the electrolytic solution or electrolyte, and on the other hand may allow an alloying reaction to occur between the metallic lithium and the metallic lithium alloy in the sixth active material layer 100 during the charge and discharge processes of the battery, further facilitating the uniform deposition of metallic lithium, and thus avoiding the problems such as the growth of lithium dendrites caused by nonuniform deposition of metallic lithium, continuous thickening of the SEI film due to infinitely large rate of volume change, dead lithium, and penetration of the separator by lithium dendrites, etc.; and by forming a fourth artificial SEI layer 110 including a lithide on a side of the sixth active material layer 100 away from the fifth active material layer 90, it can, on the one hand, further avoid the highly reactive metallic lithium in the fifth active material layer 90 to directly contact the electrolytic solution or electrolyte, and on the other hand, it may further promote the rapid migration of lithium ions, thereby effectively avoiding the growth of lithium dendrites caused by the delayed deintercalation of lithium ions at the anode electrode, as well as the problems such as continuous thickening of the SEI film due to infinitely large rate of volume change, dead lithium, and penetration of the separator by lithium dendrites, etc., thereby being further conducive to improving the cycle stability of the lithium metal battery.

It should be noted that the materials, thicknesses, and preparation methods of the fourth active material layer 70, the fifth active material layer 90, the sixth active material layer 100, the third artificial SEI layer 80, and the fourth artificial SEI layer 110 have been described in detail earlier and will not be repeated here.

In a third aspect of the present application, the present application proposes a lithium metal battery. According to an embodiment of the present application, the lithium metal battery includes the aforementioned anode electrode sheet or the anode electrode sheet obtained by the method for preparing the anode electrode sheet described above. Thereby, the lithium metal battery exhibits high cycle stability. It should be noted that the features and advantages described above for the anode electrode sheet also apply to the lithium metal battery and will not be repeated here.

According to an embodiment of the present application, the aforementioned lithium metal battery may include a liquid-state battery, a semi-solid-state battery, and an all-solid-state battery.

According to a specific embodiment of the present application, the aforementioned lithium metal battery may include a liquid-state battery and a semi-solid-state battery, wherein the liquid-state battery and the semi-solid-state battery include an electrolytic solution.

According to a specific embodiment of the present application, the aforementioned lithium metal battery may include a liquid laminated pouch battery, a liquid wound battery, or a liquid cylindrical battery composed of the aforementioned anode electrode sheet or the anode electrode sheet obtained by the aforementioned method for preparing an anode electrode sheet, a positive electrode sheet, a separator, and an electrolytic solution.

According to a specific embodiment of the present application, the aforementioned lithium metal battery may also include a semi-solid-state laminated pouch battery, a semi-solid-state wound battery, or a semi-solid-state cylindrical battery composed of the aforementioned anode electrode sheet or the anode electrode sheet obtained by the aforementioned method for preparing an anode electrode sheet, a positive electrode sheet, and a gel electrolyte.

According to a specific embodiment of the present application, the aforementioned lithium metal battery may also include a semi-solid-state laminated pouch battery, a semi-solid-state wound battery, or a semi-solid-state cylindrical battery composed of the aforementioned anode electrode sheet or the anode electrode sheet obtained by the aforementioned method for preparing an anode electrode sheet, a positive electrode sheet, a gel electrolyte, and optionally 0.5 wt% to 50 wt% of an additive.

According to a specific embodiment of the present application, the aforementioned electrolytic solution primarily includes a lithium salt, a solvent, and optionally an additive. Specifically, the solvent may include carbonates (e.g., ethylene carbonate (EC), propylene carbonate (PC), butylene carbonate (BC), dimethyl carbonate (DMC), diethyl carbonate (DEC), ethyl methyl carbonate (EMC), γ-butyrolactone (BL)), ethers (e.g., tetrahydrofuran (THF), 2-methyl-tetrahydrofuran (2-Me-THF), dimethoxy dimethyl ether (DMM), 1,2-dimethoxyethane (DME)), 1,3-dioxolane (DOL), nitriles (e.g., acetonitrile (AN)), etc.; the lithium salt may include lithium hexafluorophosphate (LiPF₆), lithium perchlorate (LiClO₄), lithium tetrafluoroborate (LiBF₄), lithium hexafluoroarsenate (LiAsF₆), other organic lithium salts (e.g., lithium trifluoromethanesulfonate (LiCF₃SO), lithium bis(trifluoromethanesulfonyl)imide (LiTFSI), lithium bis(fluorosulfonyl)imide (LiFSI), lithium trifluoromethanesulfonyl-n-perfluorobutylsulfonylimide (LiTNFSI), lithium fluorosulfonyl-n-perfluorobutylsulfonylimide (LiFNFSI), lithium bis(oxalate)borate (LiBOB), and lithium tris(trifluoromethanesulfonyl)methide (LiC(SO₂CF₃)₃), etc.); the additive may include a film-forming additive, a conductive additive, a flame-retardant additive, an overcharge protection additive, an additive for controlling water and HF content (i.e., an additive for controlling water and HF content in the electrolytic solution), a low-temperature additive (i.e., a general-purpose additive for improving low-temperature performance), it may also include an anode electrode stabilizer, i.e., an additive for improving the interfacial stability of the metallic lithium anode electrode (e.g., fluoroethylene carbonate (FEC), and lithium nitrate (LiNO₃), etc.).

In a specific embodiment of the present application, the aforementioned lithium metal battery may include a semi-solid-state battery and an all-solid-state battery, wherein the semi-solid-state battery and the all-solid-state battery include an electrolyte, and the electrolyte may include at least one of an inorganic solid-state electrolyte, a polymer solid-state electrolyte, and a composite solid-state electrolyte.

According to a specific embodiment of the present application, the aforementioned lithium metal battery may also include a solid-state laminated pouch battery, a solid-state wound battery, or a solid-state cylindrical battery composed of the aforementioned anode electrode sheet or the anode electrode sheet obtained by the aforementioned method for preparing an anode electrode sheet, a positive electrode sheet, and a solid electrolyte.

According to a specific embodiment of the present application, the specific types of the aforementioned positive electrode sheet and the positive electrode active material are not particularly limited, and those skilled in the art can make selections based on actual needs. For example, the positive electrode sheet may be a positive electrode sheet that uses a metal foil current collector or a positive electrode sheet that uses a composite current collector, and its positive electrode active material may include at least one of lithium nickel cobalt manganese oxide (LiNₓM_{y}C_{z}O₂, x+y+z=1), lithium iron manganese phosphate (LiFeₐMn_{b}PO₄, a+b=1), lithium iron phosphate, lithium manganese oxide, lithium cobalt oxide, lithium nickel oxide, a lithium-rich manganese-based positive material, lithium nickel manganese oxide (LMNO), and lithium vanadium oxide phosphate (Li₃V₂(PO₄)₃, LiVOPO₄).

According to a specific embodiment of the present application, the aforementioned separator may include polypropylene (PP) and/or polyethylene (PE).

According to a specific embodiment of the present application, the aforementioned solid-state electrolyte may include an inorganic solid-state electrolyte (e.g., an oxide solid-state electrolyte, a sulfide solid-state electrolyte, and a halide solid-state electrolyte), a polymer solid-state electrolyte, and a composite solid-state electrolyte (e.g., a composite solid-state electrolyte based on a polymer matrix and an inorganic filler), etc. Specifically, the oxide solid-state electrolyte may include NASICON-type (structurally stable, such as LATP (Li_{1.3}Al_{0.3}Ti_{1.7}(PO₄)₃), LAGP (Li_{1.5}Al_{0.5}Ge_{1.5}P₃O₁₂), perovskite-type, and garnet-type (with the highest electrical conductivity, 10⁻³ S/cm, and relatively good stability towards metallic lithium, e.g., lithium lanthanum zirconium oxide (LLZO)); a sulfide solid-state electrolyte may include a binary compound (e.g., Li₂S-SiS₂ and Li₂S-P₂S₅, Li₂S-GeS₂, etc.), a ternary compound (e.g., Li₂S-MS₂-P₂S₅ (M=Si, Ge, Sn, Al, etc.), and Li₆PS₅X type (X=F, Cl, Br, I); a halide solid-state electrolyte may include LiₐMX₄ type (where X represents the halogen elements, e.g., Li₂MnCl₄ and Li₂ZnCl₄, etc., formed by divalent metal ions, as well as a halide electrolyte formed by metal ion M in trivalent and other valence states, e.g., LiYbF₄ and LiAlF₄), LiₐMX₆ type (e.g., Li₃YCl₆ (LYC) and Li₃BrCl₆ (LYB)), and LiₐMX₈ type (e.g., Li₆CoCl₈). The polymer solid-state electrolyte may include a polymer matrix such as polyethylene oxide (PEO), polycarbonate, poly(trimethylene carbonate) (PTMC), polymethyl methacrylate (PMMA), polyacrylonitrile (PAN), polyvinylidene fluoride (PVDF), polyvinylidene fluoride-hexafluoroethylene copolymer, and lithium polyacrylate (PAL), etc.; an inorganic filler such as LATP, lithium lanthanum zirconium oxide (LLZO), aluminum oxide (Al₂O₃), and metal-organic frameworks (MOFs), etc.; and a lithium salt such as LiAsF₆, lithium hexafluorophosphate (LiPF₆), lithium perchlorate (LiClO₄), lithium bis(trifluoromethanesulfonyl)imide (LiTFSI), lithium bis(fluorosulfonyl)imide (LiFSI), and lithium tetrafluoroborate (LiBF₄), etc. Specifically, the gel electrolyte may include at least one of the aforementioned solid-state electrolytes and at least one of the aforementioned electrolytic solutions.

In a fourth aspect of the present application, the present application proposes a method for preparing a lithium metal battery. According to an embodiment of the present application, the method includes: providing an anode electrode sheet, wherein the anode electrode sheet includes a current collector having a first side and a second side opposite to each other, a first active material layer, a second active material layer, and a first artificial SEI layer are sequentially arranged on the first side of the current collector in a direction away from the current collector, the first active material layer includes metallic lithium, the second active material layer includes a metallic lithium alloy, and the first artificial SEI layer includes a lithide, a fourth active material layer and a metal compound layer are sequentially arranged on the second side of the current collector in a direction away from the current collector, the fourth active material layer includes metallic lithium; assembling the anode electrode sheet into a battery and charging it to enable the metal compound layer to form a third artificial SEI layer in situ during the charge process of the battery, wherein the third artificial SEI layer includes a lithide and a metallic lithium alloy (i.e., generating a third artificial SEI layer including a lithide and a metallic lithium alloy through an in-situ method), and wherein the metal compound layer includes a compound of at least one of halogen, oxygen, nitrogen, sulfur, and phosphorus elements with M, and M includes at least one of gold, indium, magnesium, zinc, chromium, nickel, molybdenum, tungsten, vanadium, titanium, niobium, zirconium, cobalt, manganese, aluminum, copper, silver, tin, and bismuth.

Specifically, the battery assembled from the aforementioned anode electrode sheet may be charged under conditions of 0.01C to 50C.

According to a specific embodiment of the present application, the aforementioned metal compound layer may include M^{x+}F⁻ₓ (i.e., a compound of fluorine element and M), during the charge process of the battery, M^{x+}F⁻ₓ reacts with the lithium atoms originating from the positive electrode during the charge process of the battery to generate M and lithium fluoride (LiF), and M may undergo an alloying reaction with metallic lithium to form a Li-M alloy. The involved reactions are as follows:

M^{x+}F-ₓ+X Li=M+x LiF,

M+Li=Li-M.

According to a specific embodiment of the present application, the aforementioned metal compound layer may include M^{x+}O²⁻_{x/2} (i.e., a compound of oxygen element and M), during the charge process of the battery, M^{x+}O²⁻ _{x/2} reacts with the lithium atoms originating from the positive electrode during the charge process of the battery to generate M and lithium oxide (Li₂O), and M may undergo an alloying reaction with metallic lithium to form a Li-M alloy. The involved reactions are as follows:

M^{x+}O²⁻_{x/2}+x Li=M+x/2 Li₂O,

M+Li=Li-M.

It should be noted that M^{x+}O²⁻_{x/2} may be either a conductive metal oxide or a non-conductive metal oxide. Among them, the conductive metal oxide may be divided into n-type conductive oxide (e.g., indium tin oxide (ITO), aluminum zinc oxide (AZO), fluorine-doped tin oxide (FTO), indium tin zinc oxide (ITZO), zinc tin oxide (ZTO), zinc indium tin oxide (ZITO), etc.) and p-type conductive oxide (e.g., copper oxide (CuO), CuM'O (M'=Al, In, Ga, and Mg), etc.); the non-conductive metal oxide may be magnesium oxide (MgO), aluminum oxide (Al₂O₃), zinc oxide (ZnO), silicon oxide (SiOₓ), tin oxide (SnO), manganese oxide, and zirconium oxide (ZrO), etc.

According to a specific embodiment of the present application, the aforementioned metal compound layer may include M^{x+}S²⁻_{x/2} (i.e., a compound of sulfur element and M), during the charge process of the battery, M^{x+}S²⁻ _{x/2} reacts with the lithium atoms originating from the positive electrode during the charge process of the battery to generate M and lithium sulfide (Li₂S), and M may undergo an alloying reaction with metallic lithium to form a Li-M alloy. The involved reactions are as follows:

M^{x+}S²⁻_{x/2}+x Li=M+x/2 Li₂S,

M+Li=Li-M.

According to a specific embodiment of the present application, the aforementioned metal compound layer may include M^{x+}N³⁻_{x/3} (i.e., a compound of nitrogen element and M), during the charge process of the battery, M^{x+}N³⁻ _{x/3} reacts with the lithium atoms originating from the positive electrode during the charge process of the battery to generate M and lithium nitride (Li₃N), and M may undergo an alloying reaction with metallic lithium to form a Li-M alloy. The involved reactions are as follows:

M^{x+}N³⁻_{x/3}+x Li=M+x/3 Li₃N,

M+Li=Li-M.

According to a specific embodiment of the present application, the aforementioned metal compound layer may include M^{x+}P³⁻_{x/3} (i.e., a compound of phosphorus element and M), during the charge process of the battery, M^{x+}P³⁻_{x/3} reacts with the lithium atoms originating from the positive electrode during the charge process of the battery to generate M and lithium phosphide (Li₃P), and M may undergo an alloying reaction with metallic lithium to form a Li-M alloy. The involved reactions are as follows:

M^{×+}P³⁻_{x/3}+x Li=M+x/3 Li₃P,

M+Li=Li-M.

Therefore, the lithium metal battery obtained by the method for preparing a lithium metal battery according to the present application has high cycle stability and effectively avoids the complexity degree of the process caused by multilayer deposition.

In a fifth aspect of the present application, the present application proposes an electrical device. According to an embodiment of the present application, the electrical device includes the lithium metal battery described above or the lithium metal battery obtained by the method for preparing the lithium metal battery described above. The advantages of the electrical device and the lithium metal battery described above or the method for preparing the lithium metal battery described above over the prior art will not be reiterated here.

The present application will be described below with reference to specific examples. It should be noted that these examples are illustrative only and do not limit the present application in any way.

### Example 1

An anode electrode sheet, referring to FIG. 8, including a current collector 10, a first active material layer 20, a second active material layer 30, a first artificial SEI layer 40, a fifth active material layer 90, a sixth active material layer 100, and a fourth artificial SEI layer 110.

The current collector 10 included a first side and a second side opposite to each other, and the current collector 10 included a base film 11, a first conductive layer 12, and a second conductive layer 13, wherein the first conductive layer 12 was disposed on the surface of one side of the base film 11, and the second conductive layer 13 was disposed on the surface of the opposite side of the base film 11; the material of the base film 11 was polypropylene with a thickness of 1 µm, the material of the first conductive layer 12 was copper with a thickness of 0.3 µm, and the material of the second conductive layer 13 was copper with a thickness of 0.3 µm.

The first active material layer 20, the second active material layer 30, and the first artificial SEI layer 40 were sequentially arranged on the first side of the current collector 10 in a direction away from the current collector 10, wherein the first active material layer 20 included metallic lithium, the second active material layer 30 included an alloy formed of metallic lithium and magnesium with a lithium element content of 2 atm%, and the first artificial SEI layer 40 included lithium fluoride; the fifth active material layer 90, the sixth active material layer 100, and the fourth artificial SEI layer 110 were sequentially arranged on the second side of the current collector 10 in a direction away from the current collector 10, wherein the fifth active material layer 90 included metallic lithium, the sixth active material layer 100 included an alloy formed of metallic lithium and magnesium with a lithium element content of 2 atm%, and the fourth artificial SEI layer 110 included lithium fluoride, the thicknesses of the first active material layer 20, the second active material layer 30, the fifth active material layer 90, and the sixth active material layer 100 were all 100 µm, while the thicknesses of the first artificial SEI layer 40 and the fourth artificial SEI layer 110 were both 1 µm.

The anode electrode sheet of Example 1 was used to assemble a liquid-state battery.

### 1. Preparation of Positive Electrode Sheet

The positive electrode active material LiNi_{0.8}Co_{0.1}Mn_{0.1}O₂, the conductive agent Super P, and the binder polyvinylidene fluoride (PVDF) were mixed in N-methylpyrrolidone (NMP) to prepare a positive electrode slurry, wherein the solid content in the positive electrode slurry was 50 wt%, and the mass ratio of LiNi_{0.8}Co_{0.1}Mn_{0.1}O₂, Super P, and PVDF in the solid components was 8:1:1, the positive electrode slurry was coated onto both the upper and lower surfaces of the current collector aluminum foil, which was oven-dried at 85°C, and then subjected to cold pressing, after that it was subjected to edge trimming, cut-parts, and slitting, and oven-dried under vacuum conditions at 85°C for 4 h to prepare the positive electrode sheet.

### 2. Preparation of Electrolytic Solution

In an argon atmosphere glove box (H₂O<0.1 ppm, O₂<0.1 ppm), the thoroughly dried electrolyte salt LiTFSI was dissolved in a mixed solvent (the mixed solvent included 1,3-dioxolane (DOL) and 1,2-dimethoxyethane (DME), with 1,3-dioxolane (DOL) and 1,2-dimethoxyethane (DME) mixed in a volume ratio of 50:50), which were uniformly mixed to obtain an electrolytic solution with a concentration of 1 mol/L.

### 3. Separator

A 16 µm polyethylene film was used as the separator.

### 4. Preparation of Lithium Metal Battery

The positive electrode sheet, the separator, and the anode electrode sheet of Example 1 were stacked in sequence, making the separator positioned between the positive and anode electrode sheets to play a role of isolating the positive and anode electrodes, which was wound to form a bare battery cell, the tabs were welded, and the bare battery cell was placed into an outer packing, the electrolytic solution prepared above was injected into the dried battery cell, and then subjected to encapsulating, standing, formation, shaping, and capacity testing, etc., to complete the preparation of the lithium metal battery.

The cycle performance of the lithium metal battery obtained from the anode electrode sheet of Example 1 was characterized.

### Cycle Performance Testing Method for Lithium Metal Battery

At conditions of 25°C±2°C, the battery was charged at a constant current of 0.2C until the voltage of the battery reached 4.2V, then it was switched to constant voltage charge until the charge current decreased to 0.05C, at which point the charge was stopped, after the charge, the battery was stood for 30 min, then discharged at 0.3C electric current until the voltage reached 2.6V. After repeating the above charge-discharge cycle for 50 cycles, the battery was disassembled and the anode electrode sheet of Example 1 was subjected to a scanning electron microscope (SEM) test.

It can be seen from the obtained SEM image that the surface of the anode electrode sheet of Example 1 was uniform and relatively smooth, and no significant growth of lithium dendrites was observed.

It can be seen from Example 1 that using the anode electrode sheet of the present application can improve the interfacial problems of the application of metallic lithium in a secondary battery, avoiding the problems such as continuous thickening of the SEI film, persistent growth of lithium dendrites, dead lithium, and penetration of the separator by lithium dendrites, etc., thereby being conducive to improving the cycle stability of a lithium metal battery employing such an anode electrode sheet.

In the description of this specification, reference to the description of terms such as "one embodiment", "some embodiments", "example" "specific example" or "some examples", etc., it refers to that specific features, structures, materials, or characteristics described in connection with the embodiment or example are included in at least one embodiment or example of the present application. In this specification, the illustrative expressions to the above terms are not necessarily directed to the same embodiment or example. Moreover, the specific features, structures, materials, or characteristics described can be combined in any suitable manner in any one or more embodiments or examples. In addition, without conflicting with each other, those skilled in the art can combine and integrate the different embodiments or examples described in this specification and features of different embodiments or examples.

Although the embodiments of the present application have been shown and described above, it is to be understood that the above embodiments are exemplary and are not to be construed as limitations on the present application. Those of ordinary skill in the art can make variations, modifications, substitutions, and alterations to the above embodiments within the scope of the present application.

## Claims

1. An anode electrode sheet, **characterized by** comprising:
a current collector comprising a first side and a second side opposite to each other; and
a first active material layer, a second active material layer, and a first artificial solid electrolyte interface (SEI) layer, wherein the first active material layer, the second active material layer, and the first artificial SEI layer are sequentially arranged on the first side of the current collector in a direction away from the current collector, the first active material layer comprises metallic lithium, the second active material layer comprises a metallic lithium alloy, and the first artificial SEI layer comprises a lithide.

2. The anode electrode sheet according to claim 1, wherein the current collector is a composite current collector.

3. The anode electrode sheet according to claim 1, wherein the current collector is a metal foil current collector, and the metal foil current collector comprises at least one selected from the group consisting of copper, aluminum, zinc, nickel, and chromium.

4. The anode electrode sheet according to claim 3, wherein the current collector has a thickness of 1 µm to 10 µm.

5. The anode electrode sheet according to claim 2, wherein the current collector comprises a base film, a first conductive layer disposed on one side of the base film, and a second conductive layer disposed on the opposite other side of the base film.

6. The anode electrode sheet according to claim 5, wherein the first conductive layer and the second conductive layer separately and independently comprise at least one selected from the group consisting of copper, aluminum, zinc, nickel, and chromium.

7. The anode electrode sheet according to claim 5 or 6, wherein the thicknesses of the first conductive layer and the second conductive layer are separately and independently 0.3 µm to 10 µm.

8. The anode electrode sheet according to claim 5, wherein the base film comprises at least one selected from the group consisting of polyethylene, polyethylene terephthalate, polyimide, polypropylene, polyamide, polyphenylene sulfide, and polyethylene naphthalate.

9. The anode electrode sheet according to claim 5 or 8, wherein the base film has a thickness of 1 µm to 10 µm.

10. The anode electrode sheet according to claim 5, further comprising a third active material layer disposed on a second side of the current collector, and the third active material layer comprises a metallic lithium alloy.

11. The anode electrode sheet according to claim 10, wherein the first active material layer is disposed on the first conductive layer, and the third active material layer is disposed on the second conductive layer.

12. The anode electrode sheet according to claim 10, further comprising a second artificial SEI layer disposed on a side of the third active material layer away from the current collector, and the second artificial SEI layer comprises a lithide.

13. The anode electrode sheet according to claim 5, further comprising a fourth active material layer and a third artificial SEI layer, wherein the fourth active material layer and the third artificial SEI layer are sequentially arranged on the second side of the current collector in a direction away from the current collector, the fourth active material layer comprises metallic lithium, and the third artificial SEI layer comprises a lithide and a metallic lithium alloy.

14. The anode electrode sheet according to claim 13, wherein the first active material layer is disposed on the first conductive layer, and the fourth active material layer is disposed on the second conductive layer.

15. The anode electrode sheet according to claim 5, further comprising a fifth active material layer and a sixth active material layer, wherein the fifth active material layer and the sixth active material layer are sequentially disposed on a second side of the current collector in a direction away from the current collector, the fifth active material layer comprises metallic lithium, and the sixth active material layer comprises a metallic lithium alloy.

16. The anode electrode sheet according to claim 15, wherein the first active material layer is disposed on the first conductive layer, and the fifth active material layer is disposed on the second conductive layer.

17. The anode electrode sheet according to claim 15, further comprising a fourth artificial SEI layer, the fourth artificial SEI layer is disposed on a side of the sixth active material layer away from the current collector, and the fourth artificial SEI layer comprises a lithide.

18. The anode electrode sheet according to claim 1 or 10 or 13 or 15, wherein the metallic lithium alloy comprises an alloy formed from metallic lithium and at least one selected from the group consisting of gold, indium, magnesium, zinc, chromium, nickel, molybdenum, tungsten, vanadium, titanium, niobium, zirconium, cobalt, manganese, aluminum, copper, boron, silver, tin, silicon, carbon, phosphorus, and bismuth.

19. The anode electrode sheet according to claim 18, wherein the content of lithium element in the metallic lithium alloy is 0.1 atm% to 99.9 atm%.

20. The anode electrode sheet according to claim 10 or 12, wherein the thicknesses of the first active material layer, the second active material layer, and the third active material layer are separately and independently 0.1 µm to 100 µm.

21. The anode electrode sheet according to claim 13, wherein the fourth active material layer has a thickness of 0.1 µm to 100 µm.

22. The anode electrode sheet according to claim 15 or 17, wherein the thicknesses of the fifth active material layer and the sixth active material layer are separately and independently 0.1 µm to 100 µm.

23. The anode electrode sheet according to claim 1 or 12 or 13 or 17, wherein the lithide comprises a compound of at least one selected from the group consisting of halogen, oxygen, nitrogen, sulfur, and phosphorus elements with lithium element.

24. The anode electrode sheet according to claim 13, wherein the metallic lithium alloy in the third artificial SEI layer comprises Li-M, wherein M comprises at least one selected from the group consisting of gold, indium, magnesium, zinc, chromium, nickel, molybdenum, tungsten, vanadium, titanium, niobium, zirconium, cobalt, manganese, aluminum, copper, silver, tin, and bismuth, and the molar ratio of lithide to Li-M in the third artificial SEI layer is (0.1-10):1.

25. The anode electrode sheet according to claim 12, wherein the thicknesses of the first artificial SEI layer and the second artificial SEI layer are separately and independently 0.1 µm to 1 µm.

26. The anode electrode sheet according to claim 13, wherein the third artificial SEI layer has a thickness of 0.1 µm to 1 µm.

27. The anode electrode sheet according to claim 17, wherein the fourth artificial SEI layer has a thickness of 0.1 µm to 1 µm.

28. A method for preparing an anode electrode sheet, **characterized by** comprising:
providing a current collector comprising a first side and a second side opposite to each other;
forming a first active material layer on a first side of the current collector, wherein the first active material layer comprises metallic lithium;
forming a second active material layer on a side of the first active material layer away from the current collector, wherein the second active material layer comprises a metallic lithium alloy; and
forming a first artificial SEI layer on a side of the second active material layer away from the first active material layer, wherein the first artificial SEI layer comprises a lithide.

29. The method according to claim 28, further comprising:
forming a fourth active material layer on a second side of the current collector, wherein the fourth active material layer comprises metallic lithium; and
forming a third artificial SEI layer on a side of the fourth active material layer away from the current collector, wherein the third artificial SEI layer comprises a lithide and a metallic lithium alloy.

30. The method according to claim 28, further comprising:
forming a fifth active material layer on the second side of the current collector, wherein the fifth active material layer comprises metallic lithium;
forming a sixth active material layer on a side of the fifth active material layer away from the current collector, wherein the sixth active material layer comprises a metallic lithium alloy; and
forming a fourth artificial SEI layer on a side of the sixth active material layer away from the fifth active material layer, wherein the fourth artificial SEI layer comprises a lithide.

31. A lithium metal battery, **characterized by** comprising the anode electrode sheet according to any one of claims 1-27 or the anode electrode sheet obtained by the method according to any one of claims 28-30.

32. The lithium metal battery according to claim 31, wherein the lithium metal battery comprises a liquid-state battery, a semi-solid-state battery, and an all-solid-state battery.

33. The lithium metal battery according to claim 32, wherein the lithium metal battery comprises a liquid-state battery and a semi-solid-state battery, wherein the liquid-state battery and the semi-solid-state battery comprise an electrolytic solution, and the electrolytic solution comprises a lithium salt and a solvent.

34. The lithium metal battery according to claim 33, wherein the lithium salt comprises at least one selected from the group consisting of lithium hexafluorophosphate, lithium perchlorate, lithium tetrafluoroborate, lithium hexafluoroarsenate, lithium trifluoromethanesulfonate, lithium bis(trifluoromethanesulfonyl)imide, lithium bis(fluorosulfonyl)imide, lithium trifluoromethanesulfonyl-n-perfluorobutylsulfonylimide, lithium fluorosulfonyl-n-perfluorobutylsulfonylimide, lithium bis(oxalate)borate, and lithium tris(trifluoromethanesulfonyl)methide.

35. The lithium metal battery according to claim 33 or 34, wherein the solvent comprises at least one selected from the group consisting of ethylene carbonate, propylene carbonate, butylene carbonate, dimethyl carbonate, diethyl carbonate, ethyl methyl carbonate, γ-butyrolactone, tetrahydrofuran, 2-methyltetrahydrofuran, dimethoxy dimethyl ether, 1,2-dimethoxyethane, 1,3-dioxolane, and acetonitrile.

36. The lithium metal battery according to claim 35, wherein the electrolytic solution further comprises an additive, the additive comprises at least one selected from the group consisting of a film-forming additive, a conductive additive, a flame-retardant additive, an overcharge protection additive, an additive for controlling water and HF content, a low-temperature additive, and an anode electrode stabilizer.

37. The lithium metal battery according to claim 31, wherein the lithium metal battery comprises a semi-solid-state battery and an all-solid-state battery, wherein the semi-solid-state battery and the all-solid-state battery comprise an electrolyte, and the electrolyte comprises at least one selected from the group consisting of an inorganic solid-state electrolyte, a polymer solid-state electrolyte, and a composite solid-state electrolyte; and the inorganic solid-state electrolyte comprises at least one selected from the group consisting of an oxide solid-state electrolyte, a sulfide solid-state electrolyte, and a halide solid-state electrolyte.

38. A method for preparing a lithium metal battery, **characterized by** comprising:
providing an anode electrode sheet, wherein the anode electrode sheet comprises a current collector having a first side and a second side opposite to each other, a first active material layer, a second active material layer, and a first artificial SEI layer are sequentially arranged on the first side of the current collector in a direction away from the current collector, the first active material layer comprises metallic lithium, the second active material layer comprises a metallic lithium alloy, and the first artificial SEI layer comprises a lithide, a fourth active material layer and a metal compound layer are sequentially arranged on the second side of the current collector in a direction away from the current collector, and the fourth active material layer comprises metallic lithium; and
assembling the anode electrode sheet into a battery and charging the battery to enable the metal compound layer to form a third artificial SEI layer in situ during the charge process of the battery, wherein the third artificial SEI layer comprises a lithide and a metallic lithium alloy,
wherein the metal compound layer comprises a compound of at least one selected from the group consisting of halogen, oxygen, nitrogen, sulfur, and phosphorus elements with M, and M comprises at least one selected from the group consisting of gold, indium, magnesium, zinc, chromium, nickel, molybdenum, tungsten, vanadium, titanium, niobium, zirconium, cobalt, manganese, aluminum, copper, silver, tin, and bismuth.

39. An electrical device, **characterized by** comprising the lithium metal battery according to any one of claims 31 to 37 or the lithium metal battery obtained by the method according to claim 38.
